# EUROPEAN PATENT SPECIFICATION

(11) **EP 0 785 971 B1**
(45) Date of publication and mention of the grant of the patent: **10.02.1999**
(21) Application number: 95936486.0
(22) Date of filing: 10.10.1995
(51) Int. Cl.: C08L 63/00, C08L 63/08, C08C 19/06

(54) **EPOXIDIZED MONOHYDROXYLATED RUBBER TOUGHENING MODIFIERS FOR EPOXY RESINS**
EPOXIDIERTER UND MONOHYDROXYLIERTER KAUTSCHUK VERWENDBAR FÜR DIE ÄNDERUNG DER ZÄHIGKEIT VON EPOXIDHARZEN
MODIFICATEURS DURCISSANTS A BASE DE CAOUTCHOUC MONOHYDROXYLE EPOXYDE, DESTINES A DES RESINES EPOXY

(30) Priority: 11.10.1994 US 320801; 11.10.1994 US 320809
(43) Date of publication of application: 30.07.1997
(73) Proprietor: SHELL INTERNATIONALE RESEARCH MAATSCHAPPIJ B.V., 2596 HR Den Haag (NL)
(72) Inventor: MASSE, Michael, Alan, Richmond, TX 77469 (US); ST. CLAIR, David, John, Houston, TX 77079 (US); ERICKSON, James, Robert, Katy, TX 77450 (US)
(86) International application number: EP9504031
(87) International publication number: WO9611238

(56) References cited:
- US-A- 5 332 783

## Description

The present invention relates to the use of epoxidized monohydroxylated polydiene polymers as toughening modifiers for aromatic or cycloaliphatic epoxy resins. The present invention also relates to blends of such epoxy resins and epoxidized monohydroxylated polydiene polymers useful for structural adhesives, coatings, especially primers, electrical applications such as castings, coatings, encapsulants, potting compounds, solder masking compounds, and laminates and construction applications such as flooring, civil engineering, concrete repair and consolidation, secondary containment of tankage, grouts, sealants, and polymer concrete, and structural composites, and tooling.

Cured epoxy resins are typically strong, rigid, hard materials. Further, because of their chemical constitution they adhere strongly to many substrate materials. These physical characteristics of cured epoxy resins make them useful in a broad range of applications. One disadvantage of cured epoxy resins is their brittle character. When subjected to impact, cyclic stresses, thermal stresses, or differences in adhesive-substrate expansivities, epoxy resins tend to fail at relatively low applied stresses in a brittle manner. The goal of much effort in this area has been to improve the toughness, or equivalently stated, the energy required to fracture, epoxy resins. Improvements in this regard lead to mechanically superior materials.

Therefore, it would be advantageous if an epoxy resin composition with increased toughness could be prepared. Importantly, the desired increase in toughness must occur with little or no sacrifice in the beneficial mechanical properties of epoxy resins such as strength, rigidity, hardness, and adhesion.

One route to this improvement is to incorporate a rubber into the epoxy matrix. Increases in toughness by incorporation of a rubber phase in an epoxy matrix are known. Carboxy functional rubbers, as described in U.S. Patent 3,823,107 have been used as modifiers for epoxy resins. These carboxy functional modifiers suffer, however, the disadvantage that they must be pre-reacted with the epoxy resin before cure so that useful improvements in properties are achieved. Anhydride or acid functional graft copolymers, as described in U.S. Patent 5,115,019 have been used as modifiers for epoxy resins. These rubbers also suffer the disadvantage that pre-reaction is required. Further, in some cases solvent blending and formation of emulsions of the polymeric modifier is required. The processes required to disperse these polymers possess the further disadvantage that the resulting dispersion of rubber in epoxy is sensitive to the process parameters such as temperature and shear rate during mixing, length of time of mixing, and type and amount of solvent so that inconsistent products are produced with varying properties.

A second disadvantage of epoxy resins is their propensity to absorb water leading to lowered glass transition temperatures and lessened mechanical properties. The objective of efforts in this area has been to reduce the amount of water absorbed by incorporating strongly hydrophobic materials into epoxy resins.

Low viscosity epoxidized polydiene polymers are known to be used in the modification of epoxy resins. Such polymers are described in U.S. Patent 5,229,464. These polymers are liquid epoxidized rubbers. Compatible blends of the polymers of the above-described patent and epoxy resins are described in U. S. Patent 5,332,783. The blends described in the afore-mentioned patent application have the disadvantage that their compatibility with epoxy resins is limited. Their limited compatibility does not extend to a broad range of epoxy resins and curing agents. Compatibilizing curing agents are required. They have the further disadvantage that even when marginally compatible, these polymers do not yield final cured epoxy resins having improved toughness. Additionally, the compatibilizing curing agents lead to cured epoxy resins have significantly reduced rigidity which makes them applicable in only limited applications.

The monohydroxylated epoxidized polymers of the present invention possess dual functionality in that both epoxy and hydroxyl groups are present and yield cured epoxy resin compositions having a superior balance of properties. The monohydroxylated polymers of the present invention provide an improved balance of properties over the previous technology in that greater toughness is achieved while maintaining higher strength and rigidity. Therefore, the compositions of the present invention present a broad utility. Additionally, the monohydroxylated epoxidized polymers of the present invention are simply blended with epoxy resins before cure with no pre-reaction or solvent required. Further, it is anticipated that the aliphatic character of these monohydroxylated epoxidized polydiene polymers will reduce the amount of water absorbed by the rubber modified epoxy resin and also provide materials of relatively low dielectric constant.

The present invention relates to a toughened epoxy resin composition comprising
(a) a curable aromatic or cycloaliphatic epoxy resin,
(b) a monohydroxylated epoxidised polydiene polymer which comprises at least two polymerisable ethenically unsaturated hydrocarbon monomers wherein at least one is diene monomer which yields unsaturation suitable for epoxidation, and wherein the polymer contains from 0.5 to 7 milliequivalents (meq) of epoxy per gram of polymer, and
(c) a curing agent.
These monohydroxylated polymers may contain up to 60% by weight, of at least one vinyl aromatic hydrocarbon, preferably styrene. The polymers may be block or randomly copolymerised copolymers of at least two polymerisable ethenically unsaturated hydrocarbon monomers wherein at least one is a diene monomer which yields unsaturation suitable for epoxidation. These polymers suitably have a molecular weight in the range of from 1000 to 300,000, preferably in the range of from 1000 to 100,000, and more preferably in the range of from 1000 to 20,000 and are preferably liquids. These polymers are generally epoxidized such that they contain from 0.5 to 7 milliequivalents (meq) of epoxy per gram of polymer.

The preferred monohydroxylated polydiene polymer of the present invention has the structural formula

(I) (HO)ₓ-A-S_{z}-B-(OH)_{y}

wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers. These polymers may contain up to 60% by weight of at least one vinyl aromatic hydrocarbon, preferably styrene. Preferably, the A blocks should have a greater concentration of more highly substituted aliphatic double bonds than the B blocks have. Thus, the A blocks have a greater concentration of di-, tri-, or tetra-substituted unsaturation sites (aliphatic double bonds) per unit of block mass than the B blocks have. This produces a polymer wherein the most facile epoxidation occurs in the A blocks. The A blocks have a molecular weight in the range of from 100 to 6000, preferably in the range of 500 to 4,000, and more preferably in the range of 1000 to 3000, and the B blocks have a molecular weight in the range of from 1000 to 15,000, preferably in the range of 2000 to 10,000, and more preferably in the range of 3000 to 6000. S is a vinyl aromatic hydrocarbon block which may have a molecular weight in the range of from 100 to 10,000. x and y are 0 or 1. Either x or y must be 1, but only one at a time can be 1. z is 0 or 1. Either the A or the B block may be capped with a miniblock of a polymer of a different composition having a molecular weight in the range of from 50 to 1000, to compensate for any initiation, tapering due to unfavorable copolymerization rates, or capping difficulties. The composition contains preferably 1 to 50% by weight of the epoxidized polymer. The polymer contains preferably from 1.5 to 6.0 milliequivalents of epoxy per gram of polymer.

The composition according to the present invention may comprise an aromatic epoxy resin. Suitable aromatic epoxy resins include glycidyl ethers prepared by the reaction of epichlorohydrin with an aromatic compound containing at least one hydroxyl group carried out under alkaline reaction conditions. The epoxy resin products obtained when the hydroxyl group-containing compound is bisphenol-A are represented by the structure below wherein n is zero or a number greater than 0, suitably in the range of from 0 to 10, preferably in the range of from 0 to 2.

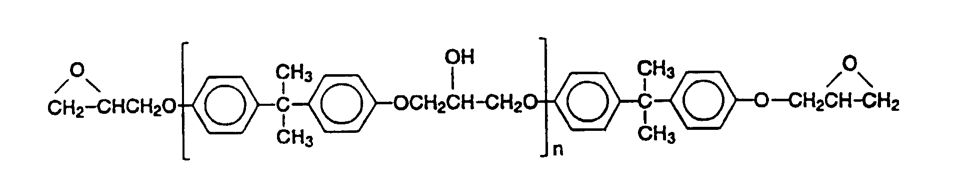

Other suitable epoxy resins can be prepared by the reaction of epichlorohydrin with mononuclear di- and trihydroxy phenolic compounds such as resorcinol and phloroglucinol or selected polynuclear polyhydroxy phenolic compounds such as bis(p-hydroxyphenyl)methane and 4, 4-dihydroxybiphenyl.

Aromatic epoxy resins suitable for the present compositions have molecular weights suitably within the range of from 86 to 10,000, preferably in the range of from 200 to 1500. The commercially-available epoxy resin EPON Resin 828 (EPON is a trade mark), a reaction product of epichlorohydrin and 2,2-bis(4-hydroxyphenylpropane) (bisphenol-A) having a molecular weight of about 400, an epoxide equivalent (ASTM D-1652) of about 185-192, and an n value (from the formula above) of about 0.13, is presently the preferred aromatic epoxy resin because of its low viscosity, mechanical performance, and commercial availability. Other examples of aromatic epoxy resins are liquid resins such as EPON 825, a reaction product of epichlorohydrin and bisphenol-A with an n value of about 0.04, and EPON 826, a reaction product of epichlorohydrin and bisphenol-A with an n value of about 0.08, and solid resins such as EPON 1001, a reaction product of epichlorohydrin and bisphenol-A with an n value of about 2.3, EPON 1002, a reaction product of epichlorohydrin and bisphenol-A with an n value of about 3.4, and EPON 1031, a reaction product of epichlorohydrin and tetraphenylol ethane with an epoxide equivalent weight of about 220. The composition according to the present invention may comprise a cycloaliphatic epoxy resin.

A cycloaliphatic epoxy resin component of the composition can be any curable cycloaliphatic resin having, on the average, more than one epoxide group per molecule and may bear substituents which do not materially interfere with the curing reaction.

Suitable cycloaliphatic epoxy resins include those made by oxidation of cyclic polyolefins with a peracid, typically peracetic acid. The major suppliers of suitable cycloaliphatic epoxy resins are Union Carbide and Ciba Geigy. The resins are marketed by Union Carbide as Cycloaliphatic Epoxides and, more recently, under the trade name CYRACURE. Typical structures for these resins are given in Union Carbide brochures "Cycloaliphatic Epoxide Systems", 9/87, and "CYRACURE Cycloaliphatic Epoxides, Cationic UV Cure", 4/92. A particularly preferred cycloaliphatic epoxy resin is Union Carbide's ERL-4221, also sold as CYRACURE UVR-6110 (3,4-epoxycyclohexylmethyl-3,4-epoxycyclohexane carboxylate). This is also the most widely used cycloaliphatic epoxy resin in the industry today. The epoxidized polydiene polymers of this invention have particularly good compatibility with CYRACURE UVR-6110, making them particularly good tougheners for this resin.

Other cycloaliphatic epoxy resins include those having glycidyl ether epoxide groups. Glycidyl ether epoxy resins are typically made by reaction of a diol or polyol with epichlorohydrin. A particularly preferred glycidyl ether epoxy resin is EPONEX 1510 ("EPONEX" is a trade mark) from Shell Chemical Company, made by reaction of hydrogenated bis-phenol A with epichlorohydrin. Other examples of aliphatic glycidyl ether epoxy resins outside the scope of the invention are those made by reaction of epichlorohydrin with low molecular weight alcohols such as 1,4-butane diol and 1,6-hexane diol.

Aromatic epoxy resins may be used in conjunction with a cycloaliphatic epoxy resin. However, the presence of aromatic epoxy resins in a formulation can reduce the resistance of the composition to degradation by light so for certain uses, they may only form a minor portion of the total amount of epoxy resin.

The epoxy content range able to impart the advantageous properties of the present invention, varies slightly depending on whether it is an aromatic epoxy resin or a cycloaliphatic epoxy resin that is the predominant curable resin in the composition. Herein comments regarding required or preferred polymer epoxy contents, polymer vinyl aromatic hydrocarbon levels, curing agents, additional composition components etc. are made in relation to either an aromatic epoxy resin composition or a cycloaliphatic epoxy resin composition, which should be understood to indicate a composition in which the specified resin is the predominant epoxy resin. If equal amounts of each epoxy resin are present then either set of comments are applicable.

Monoepoxide resins can also be used at low levels as reactive diluents to reduce viscosity.

Polymers containing ethylenic unsaturation can be prepared by anionically copolymerising one or more olefins, particularly diolefins, by themselves or with one or more alkenyl aromatic hydrocarbon monomers. The copolymers may, of course, be random, tapered, block or a combination of these.

Diene containing polymers, having residual unsaturation suitable for epoxidation, may also be obtained by other means of polymerisation, such as by cationic polymerisation or free radical polymerisation. Using cationic polymerisation, monomers such as substituted 1-butenes, 1-pentenes and dienes such as isoprene and butadiene can be copolymerised. Like anionic polymerisation, living cationic polymerisation allows the copolymers to be block copolymers having the residual diene double bond localized within the polymer. Dienes may be polymerised together with acrylic monomers by initiation with a free radical initiator, such a peroxide or AIBN. For pressure sensitive adhesive applications, monomers such as n-butyl acrylate, 2-ethyl-hexyl acrylate and isoprene may be used, and other modifying monomers, such as acrylic acid or 2-hydroxy-ethyl acrylate may also be used. Other polymerisation methods including coordination/insertion mechanisms such as Ziegler-Natta polymerisations, metallocene polymerisations, and metathesis polymerisations can be used to make the diene containing polymers.

The polymers containing ethylenic unsaturation or both aromatic and ethylenic unsaturation may be prepared using anionic initiators or polymerisation catalysts. Such polymers may be prepared using bulk, solution or emulsion techniques. When polymerised to high molecular weight, the polymer containing at least ethylenic unsaturation will, generally, be recovered as a solid such as a crumb, a powder or a pellet. When polymerised to low molecular weight, it may be recovered as a liquid.

In general, when solution anionic techniques are used, copolymers of conjugated diolefins, optionally with vinyl aromatic hydrocarbons, are prepared by contacting the monomer or monomers to be polymerised simultaneously or sequentially with an anionic polymerisation initiator such as group IA metals, their alkyls, amides, silanolates, naphthalides, biphenyls or anthracenyl derivatives. It is preferred to use an organo alkali metal (such as sodium or potassium) compound in a suitable solvent at a temperature within the range of from -150°C to 300°C, preferably at a temperature within the range of from 0°C to 100°C. Particularly effective anionic polymerization initiators are organo lithium compounds having the general formula:

RLiₙ

wherein R is an aliphatic, cycloaliphatic, aromatic or alkyl-substituted aromatic hydrocarbon radical having from 1 to 20 carbon atoms and n is an integer of 1 to 4.

Conjugated diolefins which may be polymerised anionically include those conjugated diolefins containing from 4 to 24 carbon atoms such as 1,3-butadiene, isoprene, piperylene, methylpentadiene, phenyl-butadiene, 3,4-dimethyl-1,3-hexadiene and 4,5-diethyl-1,3-octadiene. Isoprene and butadiene are the preferred conjugated diene monomers for use in the present invention because of their low cost and ready availability. Alkenyl (vinyl) aromatic hydrocarbons which may be copolymerised include vinyl aryl compounds such as styrene, various alkyl-substituted styrenes, alkoxy-substituted styrenes, vinyl naphthalene and alkyl-substituted vinyl naphthalenes.

The monohydroxylated polydienes can be synthesized by anionic polymerisation of conjugated diene hydrocarbons with lithium initiators. This process is well known and described in U.S. Patents Nos. 4,039,593 and Re. 27,145. Polymerisation commences with a monolithium initiator which builds a living polymer backbone at each lithium site. Typical monolithium living polymer structures containing conjugated diene hydrocarbons are:

X-A-B-Li

X-A-B-A-Li

wherein B represents polymerised units of one conjugated diene hydrocarbon such as butadiene, A represents polymerised units of another conjugated diene such as isoprene, and either A or B may contain one or more vinyl aromatic compounds such as styrene, and X is the residue of a monolithium initiator such as sec-butyllithium. The hydroxyl groups can be added by terminal capping the polymerisation with oxiranes such as ethylene oxide followed by termination with methanol.

Monohydroxy diene polymers can also be made using a mono-lithium initiator which contains a hydroxyl group which has been blocked as the silyl ether. A suitable initiator is hydroxypropyllithium in which the hydroxyl group is blocked as the tert-butyl-dimethylsilyl ether. This mono-lithium initiator can be used to polymerise isoprene or butadiene in hydrocarbon or polar solvent. The living polymer is then terminated with methanol. The silyl ether is then removed by acid catalysed cleavage in the presence of water yielding the desired monohydroxy polydiene polymer.

When one of the conjugated dienes is 1,3-butadiene and it will be hydrogenated, the anionic polymerisation of the conjugated diene hydrocarbons is typically controlled with structure modifiers such as diethylether or glyme (1,2-diethoxyethane) to obtain the desired amount of 1,4-addition. As described in Re 27,145 the level of 1,2-addition of a butadiene polymer or copolymer can greatly affect elastomeric properties after hydrogenation. The hydrogenated polymers exhibit improved heat stability and weatherability in the final adhesive, sealant or coating.

The most preferred polymers are diblock polymers which fall within the scope of formula (I) mentioned above. The overall molecular weight of such diblocks may range of from 1500 to 20000, preferably of from 3000 to 7000. Either of the blocks in the diblock may contain some randomly polymerised vinyl aromatic hydrocarbon as described above. For example, where I represents isoprene, B represents butadiene, S represents styrene, and a slash (/) represents a random copolymer block, the diblocks may have the following structures:
I-B-OH I-B/S-OH I/S-B-OH I-I/B-OH or
B/I-B/S-OH B-B/S-OH I-EB-OH I-EB/S-OH or
I-S/EB-OH I/S-EB-OH HO-I-S/B HO-I-S/EB
wherein EB is hydrogenated butadiene, -EB/S-OH means that the hydroxyl source is attached to a styrene block, and -S/EB-OH signifies that the hydroxyl source is attached to a hydrogenated butadiene block. This latter case, -S/EB-OH, requires capping of the S/EB "random copolymer" block with a mini EB block to compensate for the tapering tendency of the styrene prior to capping with ethylene oxide. These diblocks are advantageous in that they exhibit lower viscosity and are easier to manufacture than the corresponding triblock polymers. It is preferred that the hydroxyl be attached to the butadiene block because the epoxidation proceeds more favourably with isoprene and there will be a separation between the functionalities on the polymer. However, the hydroxyl may also be attached to the isoprene block, if desired. This produces a more surfactant-like molecule with less load bearing capacity. The isoprene blocks may also be hydrogenated.

Certain epoxidized triblock copolymers can also suitably be used. Such triblocks usually include a styrene block or randomly copolymerised styrene to increase the polymers glass transition temperature, compatibility with polar materials, strength, and room temperature viscosity. These triblocks may have the structures:
I-EB/S-EB-OH I-B/S-B-OH I-S-EB-OH I-S-B-OH or
I-I/S-I-OH I-S-I-OH B-S-B-OH B-B/S-B-OH or
I-B/S-I-OH I-EB/S-I-OH or
I-B-S-OH I-EB-S-OH HO-I-EB-S

The latter group of polymers specified in the last line above wherein the styrene block is external are represented by the formula

(II) (HO)ₓ-A-B-S-(OH)_{y}

wherein A, B, S, x, and y are as defined above.

Epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight fatty acid such as formic acid. These and other methods are described in detail in U. S. Patents 5,229,464 and 5,247,026.

When the concentration of alkenyl aromatic hydrocarbon monomer in the monohydroxylated epoxidized polymer is less than or equal to 5% by weight, the concentration of epoxide may range of from 2 to 7 meq/g of polymer. When the concentration of alkenyl aromatic hydrocarbon monomer is in the range of from 5% up to 20% by weight, the concentration of epoxide may range of from 1 to 7 meq/g of polymer. When the concentration of monoalkenyl aromatic hydrocarbon is in the range of from 20% to 60% by weight, the concentration of epoxide may range of from 0.5 to 7 meq/g of polymer. If the epoxy levels are any lower, the components are anticipated to be not sufficiently compatible to toughen the resin. Because of this decreased compatibility, at lower epoxy levels, the mixing temperature will have to be undesirably high. At higher epoxy levels, the components are anticipated to be too compatible and soluble to achieve the desired phase separation upon curing. It will also raise the viscosity and the cost without any corresponding benefit. The presence of the hydroxyl group allows less epoxidation, thereby decreasing the cost of the composition without adversely affecting its performance.

The preferred epoxy levels are 2.5 to 6 meq/g for less than 5% vinyl aromatic hydrocarbon, 2 to 6 for 5 to 20%, and 1 to 6 for 20 to 60%. If the epoxy levels are lower, then cloud points of 85°C or lower cannot be achieved without additional formulating ingredients. This is an indication of a uniform, compatible blend with uniform appearance and feel. Higher epoxy levels are not preferred because they increase the viscosity and cost without any appreciable benefit.

It has been found that by the proper combination of unsaturation, epoxide level, and alkenyl aromatic monomer content, a monohydroxylated epoxidized polydiene which possesses suitable compatibility with epoxy resins to yield an improved balance of properties can be made. The presence of epoxidation and unsaturation is required in the monohydroxylated polymers of this invention. The diene monomers remain unsaturated before epoxidation in the preferred polymers. When alkenyl aromatic monomers are present at concentrations of less than 5% by weight, the most preferred epoxide level ranges from 3 to 5 meq/g of polymer. When alkenyl aromatic monomers are incorporated at levels of 5% up to 20% by weight in the largely unsaturated polydiene block copolymer, its compatibility with epoxy resin is improved to such a degree that lower levels of epoxidation will yield improved rubber modified epoxy resins and the most preferred range is 2.5 to 4.5. When alkenyl aromatic monomers are present at concentrations of 20% to 60% by weight or greater, the most preferred epoxide level ranges from 1.5 to 4 meq/g of polymer. These ranges are believed to be optimum because they allow blends to be made with a cloud point of no more than 70°C (low end of range) and as low as 40 to 50°C (high end of range). It is believed that such compositions have the proper phase separation to achieve compositions with the best combination of properties, appearance, and feel.

The ability to form suitably compatible blends with epoxy resins is one primary feature of the molecules of the present invention. While the preferred monohydroxylated epoxidized polymers are largely unsaturated, analogous hydrogenated polymers may also be suitable. In polymers of high epoxy and styrene content it is anticipated that suitable compatibility with epoxy resins will result even when all the unsaturation is consumed by hydrogenation. These polymers offer the further advantages of improved chemical resistance and improved thermo-oxidative, oxygen, ozone and ultraviolet stability.

It has been found that monohydroxylated polymers which are too low in unsaturation or too low in epoxidation are highly incompatible with cycloaliphatic epoxy resins. These polymers can be used to produce excellent toughened cycloaliphatic epoxy resin compositions if another major ingredient is incorporated into the composition at a level of at least 20 percent by weight. It is preferred that no more than about 60 percent by weight of this component be added to the composition because the curing agents such as the cationic photoinitiator, UVI-6974, become insoluble in the formulation. This third component is a vinyl ether. Vinyl ethers are particularly well suited for use in combination with cycloaliphatic epoxy resins because vinyl ethers can also be cured via a cationic cure mechanism which is frequently used to cure cycloaliphatic epoxy resin compositions. In compatibility screening studies of the commercially available vinyl ethers, one vinyl ether stood out as having particularly good compatibility with the epoxidized hydrogenated polymers. This vinyl ether was RAPI-CURE CHVE (RAPI-CURE is a trade mark), cyclohexane dimethanol divinyl ether, from ISP, Inc. Judging from the structures of the other commercially available vinyl ethers, it is likely that RAPI-CURE CHVE will also be the most effective for compatibilizing the other monohydroxylated epoxidized polymers and cycloaliphatic resins of this invention.

In another embodiment of this invention, a blend of a monohydroxylated epoxidized polydiene polymer used as a toughness modifier and a low molecular weight epoxy functional diluent used as a viscosity reducer is employed as a modifier for cycloaliphatic epoxy resins. These diluents include epoxidized oils, such as epoxidized soybean oil and epoxidized castor oil, naturally occurring epoxidized oils, such as vernonia oil, epoxidized olefins, such as vinyl cyclohexene monoxide, and glycidyl ether epoxides such as butyl glycidyl ether and phenyl glycidyl ether. The appropriate ratio of monohydroxylated epoxidized polydiene polymer to epoxidized diluent must be determined for each particular application. However, typically, the weight ratio of monohydroxylated epoxidized polymer to epoxidized diluent should range from 100/1 to about 1/1.

Examples of useful flexibilizers are aromatic monofunctional epoxy resins, aliphatic mono-, di-, and multi-functional epoxy resins, and epoxy functional oils. Examples of monofunctional epoxy resins useful herein as flexibilizers are cresyl glycidyl ether, butyl glycidyl ether and phenyl glycidyl ether. Other epoxy functional materials are also useful in the blends. Examples of epoxy functional oils include epoxidized linseed oil, epoxidized soybean oil, epoxidized castor oil, and vernonia oil. These additional epoxy functional materials are low molecular weight oils and also tend to impart lower viscosities to formulations incorporating the compositions of the present invention.

The monohydroxylated epoxidized rubber modified epoxy resins according to the invention can be cured by a variety of means. Suitable epoxy curing agents include anionic initiators, cationic initiators, carboxy functionalized polyesters, polyamides, amidoamines, polyamines, melamineformaldehydes, phenol-formaldehydes, urea-formaldehydes, dicyandiamide, polyphenols, polysulfides, ketimines, novolacs, anhydrides, blocked isocyanates, anhydrides, and imidazoles. The composition will generally contain from 1 to 60, preferably 30 to 60, weight percent curing agent based on the epoxy resin composition.

Anhydride curing agents are commonly used. Such anhydride curing agents may be generally described as any compound containing one or more anhydride functional groups. Most commonly used anhydrides have an aromatic, cycloaliphatic, or aliphatic structure. The curing agent may be selected from the group consisting of phthalic anhydride, substituted phthalic anhydrides, hydrophthalic anhydrides, substituted hydrophthalic anhydrides, succinic anhydride, substituted succinic anhydrides, halogenated anhydrides, multifunctional carboxylic acids, and polycarboxylic acids. Examples include phthalic anhydride (PA), tetrahydrophthalic anhydride (THPA), nadic methyl anhydride (NMA), hexahydrophthalic anhydride (HHPA), pyromellitic dianhydride (PMDA), methyltetrahydro-phthalic anhydride (MTHPA), and dodecenylsuccinic anhydride (DSA). In addition, multifunctional carboxylic acids will provide similar performance. The anhydride is combined with the modified epoxy resins such that a suitable anhydride/molar ratio is achieved. This ratio should range of from 0.8/1.0 to 1.2/1.0 to achieve suitably complete epoxy network formation. It has now been found that the ratios which are most useful in achieving improved properties are those that are as close as possible to 1/1. Typically, the anhydride cures are conducted at elevated temperatures, 100 to 170°C for a period of 30 minutes to 6 hours, and are often referred to as "bake cures." The anhydride bake cures can be accelerated by using a curing accelerator.

Suitable curing accelerators include trialkyl amines, hydroxyl-containing compounds and imidazoles. Benzyldimethylamine (BDMA), 2-ethyl-4-methylimidazole (EMI) and BF₃ amine complexes have been found to work well in curing the blends of the present invention.

Aliphatic amines such as diethylene triamine (DETA) and triethylene tetraamine (TETA) are useful for curing the modified epoxy resins of the present invention. Aromatic amines such as diethyltoluenediamine and metaphenylenediamine (MPDA) are useful for the curing of the compositions of the present invention. Aromatic and aliphatic amines are generally used in an equivalent ratio of from 0.8/1.0 to 1.2/1.0 by weight but it is preferred that the ratios be as close as possible to 1/1. Polyamides such as EPI-CURE 3140 (EPI-CURE is a trade mark) polyamide curing agent supplied by Shell Chemical Company are also useful in the cure of the modified epoxy compositions. Usually, from 30 to 130 parts per hundred parts of resin of polyamide is used. There is a wide range of reactivity of the various amines and polyamide curing agents and thus both room temperature and bake cures can be performed by proper choice of the curing agent and its proportion. Sulphonium salts of low nucleophilicity, 2-ethyl-a-methyl-imidazole, benzyldimethylamine (BDMA), lanthanide (III) trifluoromethane sulphonates, lithium perchlorate may also be used at catalytic levels (i.e., 0.1 to 10 parts per hundred parts of resin) to increase the rate of cure of the amine and polyamide curing agents.

Epoxy resins are known for their utility in such compositions.

Another common method to cure cycloaliphatic epoxide groups is via a catalytic, ring-opening, homopolymerization to generate ether linkages between molecules. Typical catalysts are Lewis acids, such as boron triflouride, and protic acids, including phosphoric acid and sulfonic acids such as trifluoromethanesulfonic acid. These acids will cure cycloaliphatic epoxy resins very quickly at ambient temperatures. Amine blocked versions of these acids are also useful. Therefore, the resin and catalyst must be used as a two-component product in which the two components are mixed immediately before application and must be applied before the mixture gels. These acids are also available in the salt form using volatile bases to block the epoxy curing reaction. These blocked catalysts can be mixed with the epoxy resin, since no reaction occurs at ambient temperatures, giving a one-component product. After application, the formulation is baked, releasing the blocking agent to regenerate the acid which initiates cure of the epoxide groups. Another type of blocked catalytic curing agent, which is commercially available from Union Carbide as CYRACURE UVI-6974 (CYRACURE is a trade mark), is an aryl sulphonium salt which, when exposed to ultraviolet radiation, generates a cation which can initiate cure of the epoxide groups. This cationic photoinitiator can be blended with the cycloaliphatic epoxy resin in a one-component product which, after application, can be exposed to UV radiation to initiate cure.

The blends of the present invention may be used in any of the applications in which cycloaliphatic or aromatic epoxy resins are presently used. Typical applications are structural adhesives, coatings, composites and electrical encapsulants. The compositions of the present invention are useful in adhesives (including contact adhesives, laminating adhesives, assembly adhesives, and structural adhesives), in sealants, potting compounds, coatings such as topcoats for automotive inks (as replacements for resins such as rosin, hydrocarbon and alkyds, as modifiers for cationic curing U.V. screen inks, litho and flexo inks), and molded thermoset parts. The blends of the present invention should be more flexible, have higher toughness and have better thermal shock resistance when used in a structural adhesive, coating, composite or encapsulant than products using cycloaliphatic or aromatic epoxy resins alone.

A wide variety of fillers can be used in formulations within the present invention. Suitable fillers include calcium carbonate, clays, talcs, zinc oxide and titanium dioxide silica. The amount of filler usually is in the range of from 0 to 65% by weight of the formulation depending on the type of filler used and the application for which the formulation is intended. Preferred fillers are silica and titanium dioxide.

Stabilizers known in the art may also be incorporated into the composition. These may be for protection during the life of the article against, for example, oxygen, ozone and ultra-violet radiation. These may also be for stabilization against thermo-oxidative degradation during elevated temperature processing. Antioxidants which interfere with the curing reaction should be avoided.

In structural composites applications, the epoxy resin composition includes reinforcing fibers. Such fibers include glass fibers, graphite fibers, carbon fibers, silicon carbide fibers, aramid fibers, boron fibers, alumina fibers.

Other thermosettable resins that may optionally be included in the composition include for example, polyurethane, polyureas, polyamides, brominated epoxies, phenoxy resins, polyesters, polyester-polyether copolymers, bismaleimides, polyimides, and mixtures and copolymers thereof.

The compositions in accordance with the present invention, may include other additives, such as extenders, plasticizers, pigments, reinforcing agents, flow control agents and flame retardants.

The molecular weights of linear polymers or unassembled linear segments of polymers such as mono-, di-, triblock, etc., arms of star polymers before coupling are conveniently measured by Gel Permeation Chromatography (GPC), where the GPC system has been appropriately calibrated. For anionically polymerized linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the main species shown on the chromatograph. For polydisperse polymers the weight average molecular weight should be calculated from the chromatograph and used. For materials to be used in the columns of the GPC, styrene-divinyl benzene gels or silica gels are commonly used and are excellent materials. Tetrahydrofuran is an excellent solvent for polymers of the type described herein. A refractive index detector may be used.

Measurement of the absolute molecular weight of a polymer is not as straightforward or as easy to make using GPC. A good method to use for absolute molecular weight determination is to measure the weight average molecular weight by light scattering techniques. The sample is dissolved in a suitable solvent at a concentration less than 1.0 gram of sample per 100 milliliters of solvent and filtered using a syringe and porous membrane filters of less than 0.5 microns pore sized directly into the light scattering cell. The light scattering measurements are performed as a function of scattering angle, polymer concentration and polymer size using standard procedures. The differential refractive index (DRI) of the sample is measured at the same wave length and in the same solvent used for the light scattering. The following references are in this respect of interest.
1. Modern Size-Exclusion Liquid Chromatography, M. W. Yau, J. J. Kirkland, D. D. Bly, John Wiley and Sons, New York, New York, 1979.
2. Light Scattering From Polymer Solutions, M. B. Huglin, ed., Academic Press, New York, New York, 1972.
3. W. K. Kai and A. J. Havlik, Applied Optics, 12, 541 (1973).
4. M. L. McConnell, American Laboratory, 63, May, 1978.

If desired, these block copolymers can be partially hydrogenated. Hydrogenation may be effected selectively as disclosed in U.S. Patent Reissue 27,145. The hydrogenation of these polymers and copolymers may be carried out by a variety of well established processes including hydrogenation in the presence of such catalysts as Raney Nickel, nobel metals such as platinum, soluble transition metal catalysts and titanium catalysts as described in U.S. Patent 5,039,755. The polymers will have different diene blocks and these diene blocks may be selectively hydrogenated as described in U.S. Patent 5,229,464. The partial unsaturation preferably is such that 0.5 to 7 meq/g of aliphatic double bonds remain for subsequent epoxidation.

The toughened epoxy resin compositions of this invention may be used in a broad variety of applications. They are useful in adhesives, including contact adhesives, laminated adhesives, and assembly adhesives, but they have special utility in structural adhesives where they may be combined with a broad range of curing agents to form excellent products which adhere to metals, plastic, wood, glass, and other substrates. They also have special utility in coatings (especially primers, topcoats for automotive, epoxy primers for metal, polyester coil coatings, alkyd maintenance coatings, etc.) where they may be combined with pigments and curing agents to form excellent products. Other applications for these compositions include electrical applications such as castings, encapsulants, potting compounds, solder masking compounds, and laminates and construction applications such as flooring, civil engineering, concrete repair and consolidation, secondary containment of tankage, grouts, sealants, polymer concrete, structural composites, tooling.

### Example 1

Several performance properties of cured aromatic epoxy resin compositions of the present invention are important. The tensile properties such as strength, elongation, and Young's modulus are measured according to ASTM D-638. The flexural properties such as flexural modulus, stress and strain at failure are measured according to ASTM D-790. The tensile fracture toughness as characterized by the stress intensity factor (K_{IC}) for crack propagation is measured according to ASTM E-399-83. Using the value of K_{IC} so measured, the fracture energy (G_{IC}) was calculated for the plane strain conditions employed. The adhesive properties such as lap shear stress are measured according to ASTM D-1002. The glass transition temperature (T_{g}) is measured using torsional bar dynamic mechanical analysis.

Table I below describes the composition of the epoxidized polydiene polymers used in this Example. Monohydroxylated and unhydroxylated epoxidized polydienes are compared.

**Table I**

| Composition of Epoxidized Polymers | | | | | | |
|---|---|---|---|---|---|---|
| Identification | Base Polymer Architecture | Molecular Weights (in thousands) | Styrene Content (%) | Epoxy Level (meq/ g) | Cloud Point (°C) | Hydrogenated (Y/N)* |
| A | I-B-OH | 0.68-4.08 | 0 | 3.4 | 63 | N |
| Comparative | I-B | 0.88-4.08 | 0 | 4.8 | 68 | N |

| | | | | | | |
|---|---|---|---|---|---|---|
| *Y = Yes, N = No | | | | | | |

In the base polymer architecture column of Table I, B represents poly(1,3-butadiene) blocks, I represents polyisoprene blocks, and OH represents monohydroxyl functionality. Homopolymer blocks are separated by a dash.

The cloud points of blends of the example polymers in EPON 828 (EPON is a trade mark) resin at a 1/9 ratio by weight are shown in Table I. A clear and significant advantage is shown for the monohydroxylated epoxidized polymer. Very similar cloud points are achieved for the two polymers but the polymer of the present invention achieved that cloud point with only 3.4 meq/g of epoxy, 1.4 meq/g less than the comparative unhydroxylated polymer.

The epoxy resin compositions were prepared as follows.

11 parts of monohydroxylated epoxidized polymer A or 11 parts of the comparative monohydroxylated polymer, both having the base structure I-B were added to 100 parts of EPON 828 resin, a diglycidyl ether of bisphenol-A. 33 parts of EPI-CURE 3140 (a polyamide curing agent) per hundred parts of EPON 828 resin plus epoxidized polymer were added to the mixture and stirred by hand. A small amount (less than 1 part per hundred parts of EPON 828 resin plus epoxidized polymer) of PC-1344/monofunctional glycidyl epoxy solution was added to aid in defoaming the mixture. The blend was degassed in vacuum and centrifuged. The blend was cast between glass plates to make 1/8" plaques which were cured at room temperature for 7 days before testing. The mechanical properties of the resultant rubber modified epoxy resins are listed in Table II which provides a comparison of these blends and the cured epoxy resin without added epoxidized polymer.

Incorporation of Polymer A and the comparative polymer leads to increases in fracture energy (G_{IC}) of 192% and 92%, respectively, while maintaining good tensile and flexural properties. These results demonstrate that the these epoxidized polymers are effective at achieving a superior balance of properties in epoxy resins cured with polyamides and that the monohydroxylated epoxidized polymer gives superior results to those of the unhydroxylated epoxidized polymer even though the latter has a higher epoxy content.

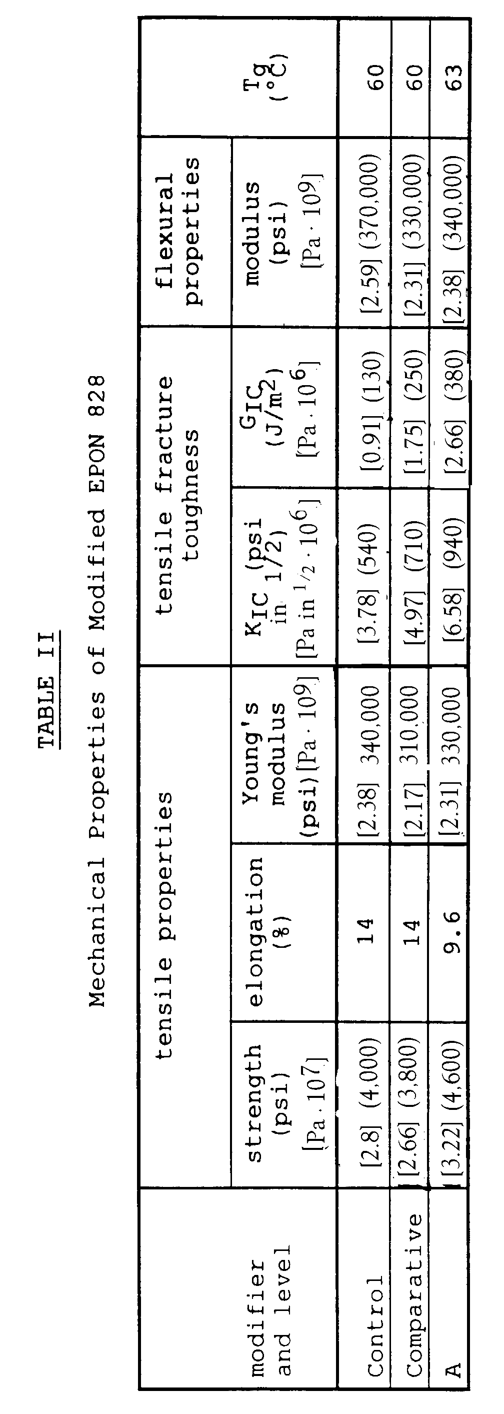

### Example 2

One important application of these epoxidized-rubber modified cycloaliphatic epoxy resin compositions is in coatings, especially coatings crosslinked via a UV initiated cationic cure reaction. Based on data in other resin systems, it is believed that an epoxidized monohydroxylated polydiene polymer would be more compatible with cycloaliphatic epoxy resins than epoxidized polydiene polymers with no hydroxyl group at the same level of epoxidation. However, no data are available which map out the compatible region for these polymers in cycloaliphatic epoxy resins.

In order to determine that low levels of epoxidation are insufficient to obtain compatibility with cycloaliphatic epoxy resin, several polymers were incorporated into the following formulation in an attempt to make modified cycloaliphatic epoxy resin compositions for coatings crosslinked via a UV initiated cationic cure reaction.

| Component | %w |
|---|---|
| CYRACURE UVR-6110 | 76.7 |
| Polymer | 20.0 |
| CYRACURE UVI-6974 | 3.2 |
| FLUORAD FC-430 | 0.1 |

The following epoxidized monohydroxylated polymers were used.

| Polymer | Base Polymer Architecture | Molecular Weights, thousands | Styrene Content, %w | Epoxy Content, meq/gm |
|---|---|---|---|---|
| 1 | I-S/EB-I | 1-2.5/1.5-1 | 40 | 1.2 |
| 2 | I-S/EB-OH | 2-2.5/1.5 | 40 | 0 |
| 3 | I-S/EB-OH | 2-2.5/1.5 | 40 | 1.5 |
| 4 | I-EB-OH | 2-4 | 0 | 0 |
| 5 | I-EB-OH | 2-4 | 0 | 1.5 |

A masterbatch of the resin, photoinitiator, and surfactant was prepared. The polymers were added to this masterbatch, and the blends were warmed to 80°C and stirred manually. The blends were then cooled to room temperature and allowed to stand to see if they would phase separate.

Results showed that all five of the blends phase separated, indicating that none of the five polymers was compatible with the cycloaliphatic epoxy.

## Claims

1. A toughened epoxy resin composition comprising
(a) a curable aromatic or cycloaliphatic epoxy resin,
(b) a monohydroxylated epoxidized polydiene polymer which comprises of at least two polymerisable ethenically unsaturated hydrocarbon monomers wherein at least one is a diene monomer which yields unsaturation suitable for epoxidation, and wherein the polymer contains from 0.5 to 7 milliequivalents(meq) of epoxy per gram of polymer, and
(c) a curing agent.

2. The composition according to claim 1 wherein the monohydroxylated epoxidized polydiene polymer has the structural formula
(HO)ₓ-A-S_{z}-B-(OH)_{y} or (HO)_{X}-A-B-S-(OH)_{Y}
wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers, S is a vinyl aromatic hydrocarbon block, x and y are 0 or 1 and either x or y must be 1 but only one at a time can be 1, and z is 0 or 1.

3. The composition according to claim 2 wherein the A blocks have a molecular weight of from 100 to 6000 and the B blocks have a molecular weight of from 1000 to 15,000.

4. The composition according to claim 2 or 3 wherein the conjugated diolefin in the A block is isoprene and the conjugated diolefin in the B block is butadiene.

5. The composition according to any one of claims 1 to 4 wherein the curing agent is selected from the group consisting of phthalic anhydride, substituted phthalic anhydrides, hydrophthalic anhydrides, substituted hydrophthalic anhydrides, succinic anhydride, substituted succinic anhydrides, halogenated anhydrides, multifunctional carboxylic acids, and polycarboxylic acids.

6. The composition according to any one of claims 1 to 5 wherein the aromatic epoxy resin is a glycidyl ether prepared by the reaction of epichlorohydrin with an aromatic compound containing at least one hydroxy group carried out under alkaline reaction conditions.

7. The composition according to any one of claims 2 to 6 wherein the concentration of the epoxidized polymer ranges from 1 to 50% by weight of the composition.

8. The composition according to any one of claims 1 to 7 wherein the amount of vinyl aromatic hydrocarbon in the polymer is 5% by weight or less and the epoxy content is 2 to 7 meq/g of polymer.

9. The composition according to any one of claims 1 to 7 wherein the amount of vinyl aromatic hydrocarbon in the polymer is from 5 to 20% by weight and the epoxy content is from 1 to 7 meq/g of polymer.

10. The composition according to any one of claims 1 to 7 wherein the amount of vinyl aromatic hydrocarbon in the polymer is from 20 to 60% by weight and the epoxy content is from 0.5 to 7 meq/g of polymer.

11. The composition according to any one of claims 1 to 8 wherein the epoxy resin is a cycloaliphatic epoxy resin and the polymer contains from 1.5 to 6.0 milliequivalents of epoxy per gram of polymer.

12. A structural adhesive composition comprising the composition according to any one of claims 1 to 11.

13. A coating composition comprising the composition according to any one of claims 1 to 11.

## Patentansprüche

1. Eine zähgemachte Epoxyharzzusammensetzung mit einem Gehalt an
(a) einem härtbaren aromatischen oder cycloaliphatischen Epoxyharz,
(b) einem monohydroxylierten epoxidierten Polydienpolymer, das wenigstens zwei polymerisierbare, ethenisch ungesättigte Kohlenwasserstoffmonomere enthält, worin wenigstens eines ein Dienmonomer ist, das zur Epoxidierung geeignete Unsättigungsstellen aufweist und worin das Polymer 0,5 bis 7 Milliäquivalente (mÄq) Epoxy je Gramm Polymer enthält, und
(c) an einem Härtungsmittel.

2. Zusammensetzung nach Anspruch 1, worin das monohydroxylierte epoxidierte Polydienpolymer die Strukturformel
(HO)ₓ-A-S_{z}-B-(OH)_{y} oder (HO)ₓ-A-B-S-(OH)_{y}
aufweist, worin A und B Polymerblöcke darstellen, die Homopolymerblöcke von konjugierten Diolefinmonomeren, Copolymerblöcke von konjugierten Diolefinmonomeren oder Copolymerblöcke von Diolefinmonomeren und monoalkenylaromatischen Kohlenwasserstoffmonomeren sein können, S einen vinylaromatischen Kohlenwasserstoffblock darstellt, x und y für 0 oder 1 stehen und entweder x oder y den Wert 1 haben muß, jedoch nur jeweils einer den Wert 1 haben kann, und z für 0 oder 1 steht.

3. Zusammensetzung nach Anspruch 2, worin die Blöcke A ein Molekulargewicht von 100 bis 6.000 und die Blöcke B ein Molekulargewicht von 1.000 bis 15.000 aufweisen.

4. Zusammensetzung nach Anspruch 2 oder 3, worin das konjugierten Diolefin im Block A Isopren ist und das konjugierten Diolefin im Block B Butadien ist.

5. Zusammensetzung nach einem der Ansprüche 1 bis 4, worin das Härtungsmittel aus der aus Phthalsäureanhydrid, substituierten Phthalsäureanhydriden, Hydrophthalsäureanhydriden, substituierten Hydrophthalsäureanhydriden, Bernsteinsäureanhydrid, substituierten Bernsteinsäureanhydriden, halogenierten Anhydriden, multifunktionellen Carbonsäuren und Polycarbonsäuren bestehenden Gruppe ausgewählt ist.

6. Zusammensetzung nach einem der Ansprüche 1 bis 5, worin das aromatische Epoxyharz ein Glycidylether ist, hergestellt durch die unter alkalischen Reaktionsbedingungen ausgeführte Umsetzung von Epichlorhydrin mit einer aromatischen Verbindung, die wenigstens eine Hydroxygruppe enthält.

7. Zusammensetzung nach einem der Ansprüche 2 bis 6, worin die Konzentration des epoxidierten Polymers im Bereich von 1 bis 50 Gew.-% der Zusammensetzung liegt.

8. Zusammensetzung nach einem der Ansprüche 1 bis 7, worin die Menge an vinylaromatischem Kohlenwasserstoff im Polymer 5 Gew.-% oder weniger beträgt und der Epoxygehalt 2 bis 7 mÄq/g Polymer ausmacht.

9. Zusammensetzung nach einem der Ansprüche 1 bis 7, worin die Menge an vinylaromatischem Kohlenwasserstoff im Polymer 5 bis 20 Gew.-% beträgt und der Epoxygehalt von 1 bis 7 mÄq/g Polymer ausmacht.

10. Zusammensetzung nach einem der Ansprüche 1 bis 7, worin die Menge an vinylaromatischem Kohlenwasserstoff im Polymer 20 bis 60 Gew.-% beträgt und der Epoxygehalt von 0,5 bis 7 mÄq/g Polymer ausmacht.

11. Zusammensetzung nach einem der Ansprüche 1 bis 8, worin das Epoxyharz ein cycloaliphatisches Epoxyharz ist und das Polymer 1,5 bis 6,0 mÄq/g Epoxy je g Polymer enthält.

12. Strukturklebstoffzusammensetzung, umfassend die Zusammensetzung nach einem der Ansprüche 1 bis 11.

13. Beschichtungszusammensetzung, umfassen die Zusammensetzung nach einem der Ansprüche 1 bis 11.

## Revendications

1. Composition de résine époxy rendue tenace, qui comprend
(a) une résine époxy aromatique ou cycloaliphatique durcissable,
(b) un polymère de polydiène époxydé monohydroxylé, qui comprend au moins deux monomères hydrocarbonés éthyléniquement insaturés et polymérisables, où au moins l'un d'entre eux est un monomère de diène qui fournit l'insaturation convenant à l'époxydation et où le polymère contient de 0,5 à 7 milliéquivalents (méq) d'époxy par gramme de polymère et
(c) un agent de durcissement.

2. Composition suivant la revendication 1, caractérisée en ce que le polymère de polydiène époxydé monohydroxylé répond à la formule de structure suivante
(HO)ₓ-A-S_{z}-B-(OH)_{y} ou (HO)_{X}-A-B-S-(OH)_{Y}
dans laquelle A et B représentent des séquences de polymères qui peuvent être des séquences homopolymériques de monomères de dioléfines conjuguées, des séquences copolymériques de monomères de dioléfines conjuguées, ou des séquences copolymériques de monomères de dioléfines et de monomères d'hydrocarbures monoalcénylaromatiques, S représente une séquence d'hydrocarbure vinylaromatique, x et y sont égaux à 0 ou à 1 et soit x soit y doit être 1, mais un seul d'entre eux peut être égal à 1 en même temps et z est égal à 0 ou à 1.

3. Composition suivant la revendication 2, caractérisée en ce que les séquences A possèdent un poids moléculaire de 100 à 6000 et les séquences B possèdent un poids moléculaire de 1000 à 15.000.

4. Composition suivant la revendication 2 ou 3, caractérisée en ce que la dioléfine conjuguée dans la séquence A est l'isoprène et la dioléfine conjuguée dans la séquence B est le butadiène.

5. Composition suivant l'une quelconque des revendications 1 à 4, caractérisée en ce que l'agent de durcissement est choisi dans le groupe constitué par l'anhydride phtalique, des anhydrides phtaliques substitués, des anhydrides hydrophtaliques, des anhydrides hydrophtaliques substitués, l'anhydride succinique, des anhydrides succiniques substitués, des anhydrides halogénés, des acides carboxyliques multifonctionnels et des acides polycarboxyliques.

6. Composition suivant l'une quelconque des revendications 1 à 5, caractérisée en ce que la résine époxy aromatique est un éther glycidylique préparé par la réaction de l'épichlorhydrine avec un composé aromatique contenant au moins un radical hydroxyle, entreprise dans des conditions réactionnelles alcalines.

7. Composition suivant l'une quelconque des revendications 2 à 6, caractérisée en ce que la concentration en polymère époxydé varie de 1 à 50% en poids de la composition.

8. Composition suivant l'une quelconque des revendications 1 à 7, caractérisée en ce que la quantité d'hydrocarbure vinylaromatique dans le polymère est de 5% en poids ou moins encore et la teneur en époxy varie de 2 à 7 méq/g de polymère.

9. Composition suivant l'une quelconque des revendications 1 à 7, caractérisée en ce que la quantité d'hydrocarbure vinylaromatique dans le polymère varie de 5 à 20% en poids et la teneur en époxy varie de 1 à 7 méq/g de polymère.

10. Composition suivant l'une quelconque des revendications 1 à 7, caractérisée en ce que la quantité d'hydrocarbure vinylaromatique dans le polymère varie de 20 à 60% en poids et la teneur en époxy varie de 0,5 à 7 méq/g de polymère.

11. Composition suivant l'une quelconque des revendications 1 à 8, caractérisée en ce que la résine époxy est une résine époxy cycloaliphatique et le polymère contient de 1,5 à 6,0 milliéquivalents d'époxy par gramme de polymère.

12. Composition adhésive structurale comprenant la composition suivant l'une quelconque des revendications 1 à 11.

13. Composition de revêtement comprenant la composition suivant l'une quelconque des revendications 1 à 11.
